# EUROPEAN PATENT SPECIFICATION

(11) **EP 3 570 122 B1**
(45) Date of publication and mention of the grant of the patent: **10.11.2021**
(21) Application number: 19175075.1
(22) Date of filing: 17.05.2019
(51) Int. Cl.: G05B 15/02, H05B 47/10

(54) **BUILDING MANAGEMENT SYSTEM CONTROL USING OCCUPANCY DATA**
GEBÄUDEVERWALTUNGSSYSTEMSTEUERUNG MIT VERWENDUNG VON BELEGUNGSDATEN
CONSTRUCTION D'UNE COMMANDE DE SYSTÈME DE GESTION À L'AIDE DE DONNÉES D'OCCUPATION

(30) Priority: 17.05.2018 US 201862672966 P
(43) Date of publication of application: 20.11.2019
(73) Proprietor: Johnson Controls Technology Company, Auburn Hills, Michigan 48326-2773 (US)
(72) Inventor: CLAIR, Jacinta Mary, Cork (IE); O'SULLIVAN, Shane D., Cork, T12 FF80 (IE); BROWNE, Jennifer Margaret, Cork (IE); WALSH, Audrey Patricia, Kilkenny (IE); DOWNEY, Sarah Ann-Marie, Cork (IE)
(74) Representative: Trinks, Ole

(56) References cited:
- EP-A1- 2 398 301
- US-A1- 2012 143 810
- US-A1- 2014 156 088
- US-A1- 2016 123 618

## Description

### CLAIM OF PRIORITY

This application claims priority to provisional U.S. Patent Application 62/672,966 filed on May 17, 2018, entitled: "Building Management System Control Using Occupancy Data,".

### BACKGROUND

The present disclosure relates generally to a building management system (BMS) and more particularly to controlling a BMS using occupancy information.

A building management system (BMS) is, in general, a system of devices configured to control, monitor, and manage equipment in or around a building or building area. A BMS can include a heating, ventilation, and air conditioning (HVAC) system, a security system, a lighting system, a fire alerting system, another system that is capable of managing building operations or devices, or any combination thereof. BMS devices can be installed in any environment (e.g., an indoor area or an outdoor area) and the environment can include any number of buildings, spaces, zones, rooms, or areas. A BMS can include a variety of devices (e.g., HVAC devices, controllers, chillers, fans, sensors, music, lighting, etc.) configured to facilitate monitoring and controlling the building space. A BMS can be implemented in a variety of buildings (e.g., airports, malls, retail stores, stadiums, etc.). US 2016/123618 A1, US 2012/143810 A1 and US 2014/156088 A1 are examples of such BMS systems.

A building environment can play a significant role in terms of atmospherics in a retail shopping experience. Music, temperature, and lighting, for example, can have a significant impact on the performance of a retail unit.

### SUMMARY

One implementation of the present disclosure is a system for controlling a space including a number of environmental sensors configured to measure an attribute of the space, and a user device. The user device configured to receive data from the number of environmental sensors, the data describing one or more characteristics of one or more individuals in the space, receive, from the user, a selection of a desired demographic, construct a signature for the space based on the desired demographic, the signature including one or more environmental conditions associated with the desired demographic, and send control signals to one or more environmental devices to control an environment of the space according to the signature.

In some embodiments, the one or more environmental devices include at least one of a lighting system, an audio system, or an HVAC system. In some embodiments, controlling an environment of the space includes controlling at least one of music, lighting, temperature, or visual displays. In some embodiments, the data includes a number of the one or more individuals, an age of the one or more individuals, and a sex of the one or more individuals. In some embodiments, the user device is further configured to receive a selection from the user to operate in a first reactive mode or a second target mode, wherein the first reactive mode constructs the signature to maximize an occupancy of the space, and wherein the second target mode constructs the signature to maximize an occupancy of the space associated with the desired demographic. In some embodiments, the user device is further configured to measure a change in the data as a result of controlling the environment of the space, and store an updated signature, the updated signature based on the change in the data. In some embodiments, the user device is further configured to send updated control signals to the one or more environmental devices to control the environment of the space according to the updated signature.

Another implementation of the present disclosure is a method of controlling a space including receiving from a plurality of environmental sensors, data describing one or more characteristics of one or more individuals in the space, receiving, from a user via a user device, a selection of a desired demographic, constructing a signature for the space based on the desired demographic, the signature including one or more environmental conditions associated with the desired demographic, and sending control signals to one or more environmental devices to control an environment of the space according to the signature.

In some embodiments, the one or more environmental devices include at least one of a lighting system, an audio system, or an HVAC system. In some embodiments, controlling an environment of the space includes controlling at least one of music, lighting, temperature, or visual displays. In some embodiments, the data includes a number of the one or more individuals, an age of the one or more individuals, and a sex of the one or more individuals. In some embodiments, the method further includes receiving a selection from the user to operate in a first reactive mode or a second target mode, wherein the first reactive mode constructs the signature to maximize an occupancy of the space, and wherein the second target mode constructs the signature to maximize an occupancy of the space associated with the desired demographic. In some embodiments, the method further includes measuring a change in the data as a result of controlling the environment of the space, and storing an updated signature, the updated signature based on the change in the data. In some embodiments, the method further includes sending updated control signals to the one or more environmental devices to control the environment of the space according to the updated signature.

Another implementation of the present disclosure is a building management system (BMS) including a number of environmental sensors configured to measure an attribute of a space and a control system. The control system is configured to receive data from the number of environmental sensors, the data describing one or more characteristics of one or more individuals in the space, receive, from a user via a user device, a selection of a desired demographic, construct a signature for the space based on the desired demographic, the signature including one or more environmental conditions associated with the desired demographic, and send control signals to one or more environmental devices to control an environment of the space according to the signature.

In some embodiments, the one or more environmental devices include at least one of a lighting system, an audio system, or an HVAC system. In some embodiments, controlling an environment of the space includes controlling at least one of music, lighting, temperature, or visual displays. In some embodiments, the data includes a number of the one or more individuals, an age of the one or more individuals, and a sex of the one or more individuals. In some embodiments, the control system is further configured to receive a selection from the user to operate in a first reactive mode or a second target mode, wherein the first reactive mode constructs the signature to maximize an occupancy of the space, and wherein the second target mode constructs the signature to maximize an occupancy of the space associated with the desired demographic. In some embodiments, the occupancy control system is further configured to measure a change in the data as a result of controlling the environment of the space, and store an updated signature, the updated signature based on the change in the data.

### BRIEF DESCRIPTION OF THE DRAWINGS

- FIG. 1: is a drawing of a building equipped with a HVAC system, according to some embodiments.
- FIG. 2: is a block diagram of a waterside system which can be used to serve the building of FIG. 1, according to some embodiments.
- FIG. 3: is a block diagram of an airside system which can be used to serve the building of FIG. 1, according to some embodiments.
- FIG. 4: is a block diagram of a building management system (BMS) which can be used to monitor and control the building of FIG. 1, according to some embodiments.
- FIG. 5: is a drawing of a retail environment which can be monitored and controlled using the BMS of FIG. 4, according to some embodiments.
- FIG. 6: is a drawing of retail environment devices within FIG. 5, which can communicate with the BMS of FIG. 4, according to some embodiments.
- FIG. 7: is a flowchart of a method for monitoring and controlling devices within a retail environment, according to some embodiments.
- FIG. 8: is a drawing of an example user interface for monitoring and controlling devices within a retail environment, according to some embodiments.

### DETAILED DESCRIPTION

### Overview

Research suggests that environmental effects such as the tempo of background music can affect sales, perceived atmosphere, and traffic flow within retail environments. The tempo, volume, genre, and modality (e.g., the key of a song, whether it is "happy" or "sad") of music have all been shown to impact the shopping experience in studies and experiments going back over fifty years.

Traditionally, a retail store environment can be set at the time of the store opening on any given day. Accordingly, the retail environment cannot adapt to the changing store population (e.g., customer demographics) in real-time. Manually adjusting the environmental conditions is a time-consuming process that relies on an operator's interpretation of what the customer wants. Maintaining a static environment means that a retailer is failing to react to changing customer demographics, and the attitude of the customers can have an impact on store foot traffic and sales.

The present disclosure includes a smart environmental system that uses contextual information about a space (e.g., a retail store, airport, stadium, etc.) to develop a reactive environment that learns from its occupants. Accordingly, the system can be used to enhance the experience of the occupant, and influence visitor behavior.

### Building HVAC Systems and Building Management Systems

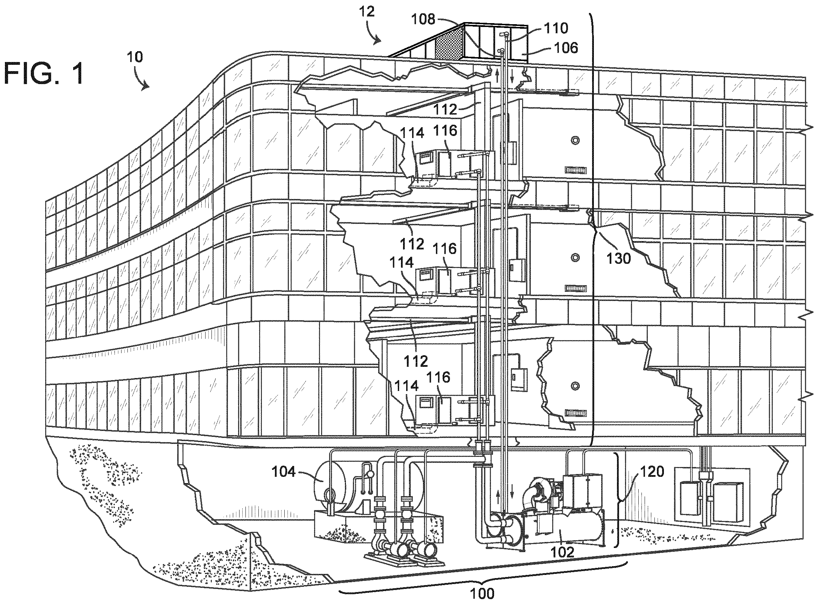

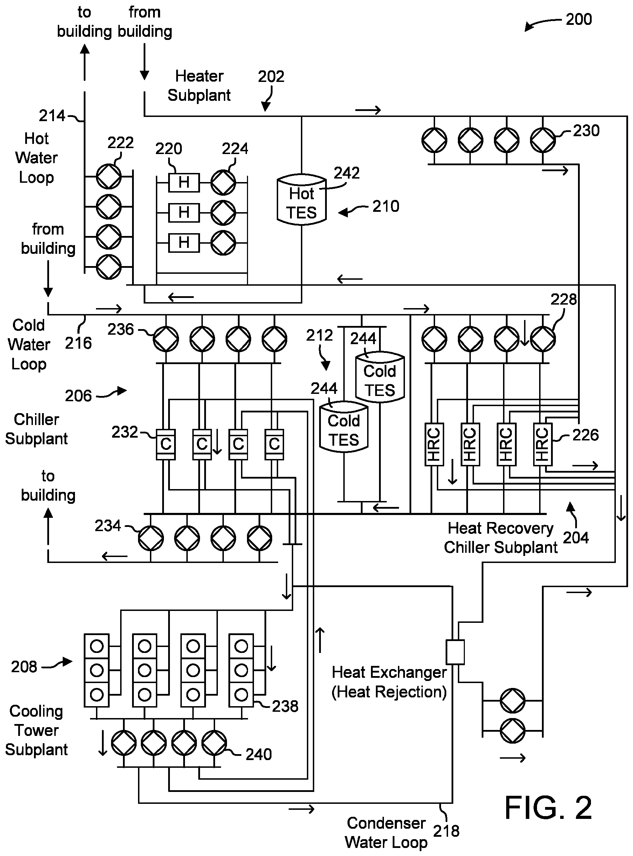

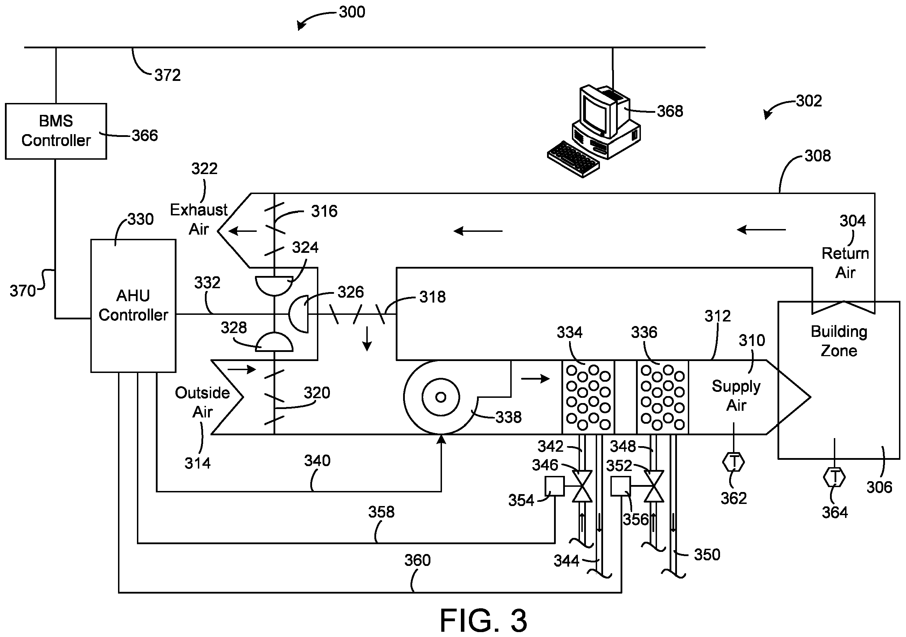

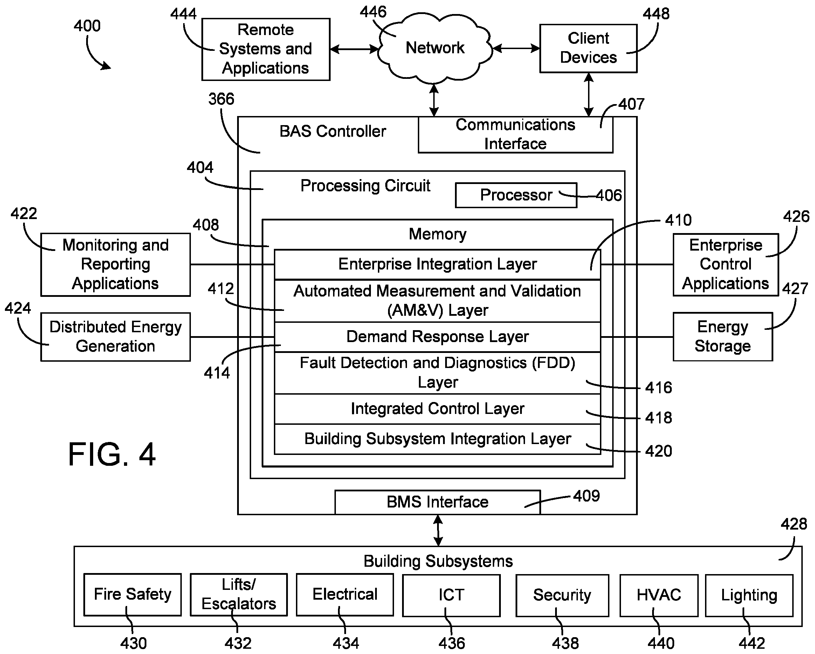

Referring now to FIGS. 1-4, several building management systems (BMS) and HVAC systems in which the systems and methods of the present disclosure can be implemented are shown, according to some embodiments. In brief overview, FIG. 1 shows a building 10 equipped with a HVAC system 100. FIG. 2 is a block diagram of a waterside system 200 which can be used to serve building 10. FIG. 3 is a block diagram of an airside system 300 which can be used to serve building 10. FIG. 4 is a block diagram of a BMS which can be used to monitor and control building 10.

### Building and HVAC System

Referring particularly to FIG. 1, a perspective view of a building 10 is shown. Building 10 is served by a BMS. A BMS is, in general, a system of devices configured to control, monitor, and manage equipment in or around a building or building area. A BMS can include, for example, a HVAC system, a security system, a lighting system, a fire alerting system, any other system that is capable of managing building operations or devices, or any combination thereof.

The BMS that serves building 10 includes a HVAC system 100. HVAC system 100 can include a number of HVAC devices (e.g., heaters, chillers, air handling units, pumps, fans, thermal energy storage, etc.) configured to provide heating, cooling, ventilation, or other services for building 10. For example, HVAC system 100 is shown to include a waterside system 120 and an airside system 130. Waterside system 120 can provide a heated or chilled fluid to an air handling unit of airside system 130. Airside system 130 can use the heated or chilled fluid to heat or cool an airflow provided to building 10. An exemplary waterside system and airside system which can be used in HVAC system 100 are described in greater detail with reference to FIGS. 2-3.

HVAC system 100 is shown to include a chiller 102, a boiler 104, and a rooftop air handling unit (AHU) 106. Waterside system 120 can use boiler 104 and chiller 102 to heat or cool a working fluid (e.g., water, glycol, etc.) and can circulate the working fluid to AHU 106. In various embodiments, the HVAC devices of waterside system 120 can be located in or around building 10 (as shown in FIG. 1) or at an offsite location such as a central plant (e.g., a chiller plant, a steam plant, a heat plant, etc.). The working fluid can be heated in boiler 104 or cooled in chiller 102, depending on whether heating or cooling is required in building 10. Boiler 104 can add heat to the circulated fluid, for example, by burning a combustible material (e.g., natural gas) or using an electric heating element. Chiller 102 can place the circulated fluid in a heat exchange relationship with another fluid (e.g., a refrigerant) in a heat exchanger (e.g., an evaporator) to absorb heat from the circulated fluid. The working fluid from chiller 102 and/or boiler 104 can be transported to AHU 106 via piping 108.

AHU 106 can place the working fluid in a heat exchange relationship with an airflow passing through AHU 106 (e.g., via one or more stages of cooling coils and/or heating coils). The airflow can be, for example, outside air, return air from within building 10, or a combination of both. AHU 106 can transfer heat between the airflow and the working fluid to provide heating or cooling for the airflow. For example, AHU 106 can include one or more fans or blowers configured to pass the airflow over or through a heat exchanger containing the working fluid. The working fluid can then return to chiller 102 or boiler 104 via piping 110.

Airside system 130 can deliver the airflow supplied by AHU 106 (i.e., the supply airflow) to building 10 via air supply ducts 112 and can provide return air from building 10 to AHU 106 via air return ducts 114. In some embodiments, airside system 130 includes multiple variable air volume (VAV) units 116. For example, airside system 130 is shown to include a separate VAV unit 116 on each floor or zone of building 10. VAV units 116 can include dampers or other flow control elements that can be operated to control an amount of the supply airflow provided to individual zones of building 10. In other embodiments, airside system 130 delivers the supply airflow into one or more zones of building 10 (e.g., via supply ducts 112) without using intermediate VAV units 116 or other flow control elements. AHU 106 can include various sensors (e.g., temperature sensors, pressure sensors, etc.) configured to measure attributes of the supply airflow. AHU 106 can receive input from sensors located within AHU 106 and/or within the building zone and can adjust the flow rate, temperature, or other attributes of the supply airflow through AHU 106 to achieve setpoint conditions for the building zone.

### Waterside System

Referring now to FIG. 2, a block diagram of a waterside system 200 is shown, according to some embodiments. In various embodiments, waterside system 200 can supplement or replace waterside system 120 in HVAC system 100 or can be implemented separate from HVAC system 100. When implemented in HVAC system 100, waterside system 200 can include a subset of the HVAC devices in HVAC system 100 (e.g., boiler 104, chiller 102, pumps, valves, etc.) and can operate to supply a heated or chilled fluid to AHU 106. The HVAC devices of waterside system 200 can be located within building 10 (e.g., as components of waterside system 120) or at an offsite location such as a central plant.

In FIG. 2, waterside system 200 is shown as a central plant having a number of subplants 202-212. Subplants 202-212 are shown to include a heater subplant 202, a heat recovery chiller subplant 204, a chiller subplant 206, a cooling tower subplant 208, a hot thermal energy storage (TES) subplant 210, and a cold thermal energy storage (TES) subplant 212. Subplants 202-212 consume resources (e.g., water, natural gas, electricity, etc.) from utilities to serve thermal energy loads (e.g., hot water, cold water, heating, cooling, etc.) of a building or campus. For example, heater subplant 202 can be configured to heat water in a hot water loop 214 that circulates the hot water between heater subplant 202 and building 10. Chiller subplant 206 can be configured to chill water in a cold water loop 216 that circulates the cold water between chiller subplant 206 building 10. Heat recovery chiller subplant 204 can be configured to transfer heat from cold water loop 216 to hot water loop 214 to provide additional heating for the hot water and additional cooling for the cold water. Condenser water loop 218 can absorb heat from the cold water in chiller subplant 206 and reject the absorbed heat in cooling tower subplant 208 or transfer the absorbed heat to hot water loop 214. Hot TES subplant 210 and cold TES subplant 212 can store hot and cold thermal energy, respectively, for subsequent use.

Hot water loop 214 and cold water loop 216 can deliver the heated and/or chilled water to air handlers located on the rooftop of building 10 (e.g., AHU 106) or to individual floors or zones of building 10 (e.g., VAV units 116). The air handlers push air past heat exchangers (e.g., heating coils or cooling coils) through which the water flows to provide heating or cooling for the air. The heated or cooled air can be delivered to individual zones of building 10 to serve thermal energy loads of building 10. The water then returns to subplants 202-212 to receive further heating or cooling.

Although subplants 202-212 are shown and described as heating and cooling water for circulation to a building, it is understood that any other type of working fluid (e.g., glycol, CO2, etc.) can be used in place of or in addition to water to serve thermal energy loads. In other embodiments, subplants 202-212 can provide heating and/or cooling directly to the building or campus without requiring an intermediate heat transfer fluid. These and other variations to waterside system 200 are within the teachings of the present disclosure.

Each of subplants 202-212 can include a variety of equipment configured to facilitate the operations of the subplant. For example, heater subplant 202 is shown to include a number of heating elements 220 (e.g., boilers, electric heaters, etc.) configured to add heat to the hot water in hot water loop 214. Heater subplant 202 is also shown to include several pumps 222 and 224 configured to circulate the hot water in hot water loop 214 and to control the flow rate of the hot water through individual heating elements 220. Chiller subplant 206 is shown to include a number of chillers 232 configured to remove heat from the cold water in cold water loop 216. Chiller subplant 206 is also shown to include several pumps 234 and 236 configured to circulate the cold water in cold water loop 216 and to control the flow rate of the cold water through individual chillers 232.

Heat recovery chiller subplant 204 is shown to include a number of heat recovery heat exchangers 226 (e.g., refrigeration circuits) configured to transfer heat from cold water loop 216 to hot water loop 214. Heat recovery chiller subplant 204 is also shown to include several pumps 228 and 230 configured to circulate the hot water and/or cold water through heat recovery heat exchangers 226 and to control the flow rate of the water through individual heat recovery heat exchangers 226. Cooling tower subplant 208 is shown to include a number of cooling towers 238 configured to remove heat from the condenser water in condenser water loop 218. Cooling tower subplant 208 is also shown to include several pumps 240 configured to circulate the condenser water in condenser water loop 218 and to control the flow rate of the condenser water through individual cooling towers 238.

Hot TES subplant 210 is shown to include a hot TES tank 242 configured to store the hot water for later use. Hot TES subplant 210 can also include one or more pumps or valves configured to control the flow rate of the hot water into or out of hot TES tank 242. Cold TES subplant 212 is shown to include cold TES tanks 244 configured to store the cold water for later use. Cold TES subplant 212 can also include one or more pumps or valves configured to control the flow rate of the cold water into or out of cold TES tanks 244.

In some embodiments, one or more of the pumps in waterside system 200 (e.g., pumps 222, 224, 228, 230, 234, 236, and/or 240) or pipelines in waterside system 200 include an isolation valve associated therewith. Isolation valves can be integrated with the pumps or positioned upstream or downstream of the pumps to control the fluid flows in waterside system 200. In various embodiments, waterside system 200 can include more, fewer, or different types of devices and/or subplants based on the particular configuration of waterside system 200 and the types of loads served by waterside system 200.

### Airside System

Referring now to FIG. 3, a block diagram of an airside system 300 is shown, according to some embodiments. In various embodiments, airside system 300 may supplement or replace airside system 130 in HVAC system 100 or can be implemented separate from HVAC system 100. When implemented in HVAC system 100, airside system 300 can include a subset of the HVAC devices in HVAC system 100 (e.g., AHU 106, VAV units 116, ducts 112-114, fans, dampers, etc.) and can be located in or around building 10. Airside system 300 can operate to heat or cool an airflow provided to building 10 using a heated or chilled fluid provided by waterside system 200.

In FIG. 3, airside system 300 is shown to include an economizer-type air handling unit (AHU) 302. Economizer-type AHUs vary the amount of outside air and return air used by the air handling unit for heating or cooling. For example, AHU 302 can receive return air 304 from building zone 306 via return air duct 308 and can deliver supply air 310 to building zone 306 via supply air duct 312. In some embodiments, AHU 302 is a rooftop unit located on the roof of building 10 (e.g., AHU 106 as shown in FIG. 1) or otherwise positioned to receive both return air 304 and outside air 314. AHU 302 can be configured to operate exhaust air damper 316, mixing damper 318, and outside air damper 320 to control an amount of outside air 314 and return air 304 that combine to form supply air 310. Any return air 304 that does not pass through mixing damper 318 can be exhausted from AHU 302 through exhaust damper 316 as exhaust air 322.

Each of dampers 316-320 can be operated by an actuator. For example, exhaust air damper 316 can be operated by actuator 324, mixing damper 318 can be operated by actuator 326, and outside air damper 320 can be operated by actuator 328. Actuators 324-328 can communicate with an AHU controller 330 via a communications link 332. Actuators 324-328 can receive control signals from AHU controller 330 and can provide feedback signals to AHU controller 330. Feedback signals can include, for example, an indication of a current actuator or damper position, an amount of torque or force exerted by the actuator, diagnostic information (e.g., results of diagnostic tests performed by actuators 324-328), status information, commissioning information, configuration settings, calibration data, and/or other types of information or data that can be collected, stored, or used by actuators 324-328. AHU controller 330 can be an economizer controller configured to use one or more control algorithms (e.g., state-based algorithms, extremum seeking control (ESC) algorithms, proportional-integral (PI) control algorithms, proportional-integral-derivative (PID) control algorithms, model predictive control (MPC) algorithms, feedback control algorithms, etc.) to control actuators 324-328.

Still referring to FIG. 3, AHU 302 is shown to include a cooling coil 334, a heating coil 336, and a fan 338 positioned within supply air duct 312. Fan 338 can be configured to force supply air 310 through cooling coil 334 and/or heating coil 336 and provide supply air 310 to building zone 306. AHU controller 330 can communicate with fan 338 via communications link 340 to control a flow rate of supply air 310. In some embodiments, AHU controller 330 controls an amount of heating or cooling applied to supply air 310 by modulating a speed of fan 338.

Cooling coil 334 can receive a chilled fluid from waterside system 200 (e.g., from cold water loop 216) via piping 342 and can return the chilled fluid to waterside system 200 via piping 344. Valve 346 can be positioned along piping 342 or piping 344 to control a flow rate of the chilled fluid through cooling coil 334. In some embodiments, cooling coil 334 includes multiple stages of cooling coils that can be independently activated and deactivated (e.g., by AHU controller 330, by BMS controller 366, etc.) to modulate an amount of cooling applied to supply air 310.

Heating coil 336 can receive a heated fluid from waterside system 200(e.g., from hot water loop 214) via piping 348 and can return the heated fluid to waterside system 200 via piping 350. Valve 352 can be positioned along piping 348 or piping 350 to control a flow rate of the heated fluid through heating coil 336. In some embodiments, heating coil 336 includes multiple stages of heating coils that can be independently activated and deactivated (e.g., by AHU controller 330, by BMS controller 366, etc.) to modulate an amount of heating applied to supply air 310.

Each of valves 346 and 352 can be controlled by an actuator. For example, valve 346 can be controlled by actuator 354 and valve 352 can be controlled by actuator 356. Actuators 354-356 can communicate with AHU controller 330 via communications links 358-360. Actuators 354-356 can receive control signals from AHU controller 330 and can provide feedback signals to controller 330. In some embodiments, AHU controller 330 receives a measurement of the supply air temperature from a temperature sensor 362 positioned in supply air duct 312 (e.g., downstream of cooling coil 334 and/or heating coil 336). AHU controller 330 can also receive a measurement of the temperature of building zone 306 from a temperature sensor 364 located in building zone 306.

In some embodiments, AHU controller 330 operates valves 346 and 352 via actuators 354-356 to modulate an amount of heating or cooling provided to supply air 310 (e.g., to achieve a setpoint temperature for supply air 310 or to maintain the temperature of supply air 310 within a setpoint temperature range). The positions of valves 346 and 352 affect the amount of heating or cooling provided to supply air 310 by cooling coil 334 or heating coil 336 and can correlate with the amount of energy consumed to achieve a desired supply air temperature. AHU 330 can control the temperature of supply air 310 and/or building zone 306 by activating or deactivating coils 334-336, adjusting a speed of fan 338, or a combination of both.

Still referring to FIG. 3, airside system 300 is shown to include a building management system (BMS) controller 366 and a client device 368. BMS controller 366 can include one or more computer systems (e.g., servers, supervisory controllers, subsystem controllers, etc.) that serve as system level controllers, application or data servers, head nodes, or master controllers for airside system 300, waterside system 200, HVAC system 100, and/or other controllable systems that serve building 10. BMS controller 366 can communicate with multiple downstream building systems or subsystems (e.g., HVAC system 100, a security system, a lighting system, waterside system 200, etc.) via a communications link 370 according to like or disparate protocols (e.g., LON, BACnet, etc.). In various embodiments, AHU controller 330 and BMS controller 366 can be separate (as shown in FIG. 3) or integrated. In an integrated implementation, AHU controller 330 can be a software module configured for execution by a processor of BMS controller 366.

In some embodiments, AHU controller 330 receives information from BMS controller 366 (e.g., commands, setpoints, operating boundaries, etc.) and provides information to BMS controller 366 (e.g., temperature measurements, valve or actuator positions, operating statuses, diagnostics, etc.). For example, AHU controller 330 can provide BMS controller 366 with temperature measurements from temperature sensors 362-364, equipment on/off states, equipment operating capacities, and/or any other information that can be used by BMS controller 366 to monitor or control a variable state or condition within building zone 306.

Client device 368 can include one or more human-machine interfaces or client interfaces (e.g., graphical user interfaces, reporting interfaces, text-based computer interfaces, client-facing web services, web servers that provide pages to web clients, etc.) for controlling, viewing, or otherwise interacting with HVAC system 100, its subsystems, and/or devices. Client device 368 can be a computer workstation, a client terminal, a remote or local interface, or any other type of user interface device. Client device 368 can be a stationary terminal or a mobile device. For example, client device 368 can be a desktop computer, a computer server with a user interface, a laptop computer, a tablet, a smartphone, a PDA, or any other type of mobile or non-mobile device. Client device 368 can communicate with BMS controller 366 and/or AHU controller 330 via communications link 372.

### Building Management Systems

Referring now to FIG. 4, a block diagram of a building management system (BMS) 400 is shown, according to some embodiments. BMS 400 can be implemented in building 10 to automatically monitor and control various building operations. BMS 400 is shown to include BMS controller 366 and a number of building subsystems 428. Building subsystems 428 are shown to include a building electrical subsystem 434, an information communication technology (ICT) subsystem 436, a security subsystem 438, a HVAC subsystem 440, a lighting subsystem 442, a lift/escalators subsystem 432, and a fire safety subsystem 430. In various embodiments, building subsystems 428 can include fewer, additional, or alternative subsystems. For example, building subsystems 428 can also or alternatively include a refrigeration subsystem, an advertising or signage subsystem, a cooking subsystem, a vending subsystem, a printer or copy service subsystem, or any other type of building subsystem that uses controllable equipment and/or sensors to monitor or control building 10. In some embodiments, building subsystems 428 include waterside system 200 and/or airside system 300, as described with reference to FIGS. 2-3.

Each of building subsystems 428 can include any number of devices, controllers, and connections for completing its individual operations and control activities. HVAC subsystem 440 can include many of the same components as HVAC system 100, as described with reference to FIGS. 1-3. For example, HVAC subsystem 440 can include a chiller, a boiler, any number of air handling units, economizers, field controllers, supervisory controllers, actuators, temperature sensors, and other devices for controlling the temperature, humidity, airflow, or other variable conditions within building 10. Lighting subsystem 442 can include any number of light fixtures, ballasts, lighting sensors, dimmers, or other devices configured to controllably adjust the amount of light provided to a building space. Security subsystem 438 can include occupancy sensors, video surveillance cameras, digital video recorders, video processing servers, intrusion detection devices, access control devices and servers, or other security-related devices.

Still referring to FIG. 4, BMS controller 366 is shown to include a communications interface 407 and a BMS interface 409. Interface 407 can facilitate communications between BMS controller 366 and external applications (e.g., monitoring and reporting applications 422, enterprise control applications 426, remote systems and applications 444, applications residing on client devices 448, etc.) for allowing user control, monitoring, and adjustment to BMS controller 366 and/or subsystems 428. Interface 407 can also facilitate communications between BMS controller 366 and client devices 448. BMS interface 409 can facilitate communications between BMS controller 366 and building subsystems 428 (e.g., HVAC, lighting security, lifts, power distribution, business, etc.).

Interfaces 407, 409 can be or include wired or wireless communications interfaces (e.g., jacks, antennas, transmitters, receivers, transceivers, wire terminals, etc.) for conducting data communications with building subsystems 428 or other external systems or devices. In various embodiments, communications via interfaces 407, 409 can be direct (e.g., local wired or wireless communications) or via a communications network 446 (e.g., a WAN, the Internet, a cellular network, etc.). For example, interfaces 407, 409 can include an Ethernet card and port for sending and receiving data via an Ethernet-based communications link or network. In another example, interfaces 407, 409 can include a Wi-Fi transceiver for communicating via a wireless communications network. In another example, one or both of interfaces 407, 409 can include cellular or mobile phone communications transceivers. In one embodiment, communications interface 407 is a power line communications interface and BMS interface 409 is an Ethernet interface. In other embodiments, both communications interface 407 and BMS interface 409 are Ethernet interfaces or are the same Ethernet interface.

Still referring to FIG. 4, BMS controller 366 is shown to include a processing circuit 404 including a processor 406 and memory 408. Processing circuit 404 can be communicably connected to BMS interface 409 and/or communications interface 407 such that processing circuit 404 and the various components thereof can send and receive data via interfaces 407, 409. Processor 406 can be implemented as a general purpose processor, an application specific integrated circuit (ASIC), one or more field programmable gate arrays (FPGAs), a group of processing components, or other suitable electronic processing components.

Memory 408 (e.g., memory, memory unit, storage device, etc.) can include one or more devices (e.g., RAM, ROM, Flash memory, hard disk storage, etc.) for storing data and/or computer code for completing or facilitating the various processes, layers and modules described in the present application. Memory 408 can be or include volatile memory or non-volatile memory. Memory 408 can include database components, object code components, script components, or any other type of information structure for supporting the various activities and information structures described in the present application. According to some embodiments, memory 408 is communicably connected to processor 406 via processing circuit 404 and includes computer code for executing (e.g., by processing circuit 404 and/or processor 406) one or more processes described herein.

In some embodiments, BMS controller 366 is implemented within a single computer (e.g., one server, one housing, etc.). In various other embodiments BMS controller 366 can be distributed across multiple servers or computers (e.g., that can exist in distributed locations). Further, while FIG. 4 shows applications 422 and 426 as existing outside of BMS controller 366, in some embodiments, applications 422 and 426 can be hosted within BMS controller 366 (e.g., within memory 408).

Still referring to FIG. 4, memory 408 is shown to include an enterprise integration layer 410, an automated measurement and validation (AM&V) layer 412, a demand response (DR) layer 414, a fault detection and diagnostics (FDD) layer 416, an integrated control layer 418, and a building subsystem integration later 420. Layers 410-420 can be configured to receive inputs from building subsystems 428 and other data sources, determine optimal control actions for building subsystems 428 based on the inputs, generate control signals based on the optimal control actions, and provide the generated control signals to building subsystems 428. The following paragraphs describe some of the general operations performed by each of layers 410-420 in BMS 400.

Enterprise integration layer 410 can be configured to serve clients or local applications with information and services to support a variety of enterprise-level applications. For example, enterprise control applications 426 can be configured to provide subsystem-spanning control to a graphical user interface (GUI) or to any number of enterprise-level business applications (e.g., accounting systems, user identification systems, etc.). Enterprise control applications 426 can also or alternatively be configured to provide configuration GUIs for configuring BMS controller 366. In yet other embodiments, enterprise control applications 426 can work with layers 410-420 to optimize building performance (e.g., efficiency, energy use, comfort, or safety) based on inputs received at interface 407 and/or BMS interface 409.

Building subsystem integration layer 420 can be configured to manage communications between BMS controller 366 and building subsystems 428. For example, building subsystem integration layer 420 can receive sensor data and input signals from building subsystems 428 and provide output data and control signals to building subsystems 428. Building subsystem integration layer 420 can also be configured to manage communications between building subsystems 428. Building subsystem integration layer 420 translate communications (e.g., sensor data, input signals, output signals, etc.) across a number of multi-vendor/multi-protocol systems.

Demand response layer 414 can be configured to optimize resource usage (e.g., electricity use, natural gas use, water use, etc.) and/or the monetary cost of such resource usage in response to satisfy the demand of building 10. The optimization can be based on time-of-use prices, curtailment signals, energy availability, or other data received from utility providers, distributed energy generation systems 424, from energy storage 427 (e.g., hot TES 242, cold TES 244, etc.), or from other sources. Demand response layer 414 can receive inputs from other layers of BMS controller 366 (e.g., building subsystem integration layer 420, integrated control layer 418, etc.). The inputs received from other layers can include environmental or sensor inputs such as temperature, carbon dioxide levels, relative humidity levels, air quality sensor outputs, occupancy sensor outputs, room schedules, and the like. The inputs can also include inputs such as electrical use (e.g., expressed in kWh), thermal load measurements, pricing information, projected pricing, smoothed pricing, curtailment signals from utilities, and the like.

According to some embodiments, demand response layer 414 includes control logic for responding to the data and signals it receives. These responses can include communicating with the control algorithms in integrated control layer 418, changing control strategies, changing setpoints, or activating/deactivating building equipment or subsystems in a controlled manner. Demand response layer 414 can also include control logic configured to determine when to utilize stored energy. For example, demand response layer 414 can determine to begin using energy from energy storage 427 just prior to the beginning of a peak use hour.

In some embodiments, demand response layer 414 includes a control module configured to actively initiate control actions (e.g., automatically changing setpoints) which minimize energy costs based on one or more inputs representative of or based on demand (e.g., price, a curtailment signal, a demand level, etc.). In some embodiments, demand response layer 414 uses equipment models to determine an optimal set of control actions. The equipment models can include, for example, thermodynamic models describing the inputs, outputs, and/or operations performed by various sets of building equipment. Equipment models can represent collections of building equipment (e.g., subplants, chiller arrays, etc.) or individual devices (e.g., individual chillers, heaters, pumps, etc.).

Demand response layer 414 can further include or draw upon one or more demand response policy definitions (e.g., databases, XML files, etc.). The policy definitions can be edited or adjusted by a user (e.g., via a graphical user interface) so that the control actions initiated in response to demand inputs can be tailored for the user's application, desired comfort level, particular building equipment, or based on other concerns. For example, the demand response policy definitions can specify which equipment can be turned on or off in response to particular demand inputs, how long a system or piece of equipment should be turned off, what setpoints can be changed, what the allowable set point adjustment range is, how long to hold a high demand setpoint before returning to a normally scheduled setpoint, how close to approach capacity limits, which equipment modes to utilize, the energy transfer rates (e.g., the maximum rate, an alarm rate, other rate boundary information, etc.) into and out of energy storage devices (e.g., thermal storage tanks, battery banks, etc.), and when to dispatch on-site generation of energy (e.g., via fuel cells, a motor generator set, etc.).

Integrated control layer 418 can be configured to use the data input or output of building subsystem integration layer 420 and/or demand response later 414 to make control decisions. Due to the subsystem integration provided by building subsystem integration layer 420, integrated control layer 418 can integrate control activities of the subsystems 428 such that the subsystems 428 behave as a single integrated supersystem. In some embodiments, integrated control layer 418 includes control logic that uses inputs and outputs from a number of building subsystems to provide greater comfort and energy savings relative to the comfort and energy savings that separate subsystems could provide alone. For example, integrated control layer 418 can be configured to use an input from a first subsystem to make an energy-saving control decision for a second subsystem. Results of these decisions can be communicated back to building subsystem integration layer 420.

Integrated control layer 418 is shown to be logically below demand response layer 414. Integrated control layer 418 can be configured to enhance the effectiveness of demand response layer 414 by enabling building subsystems 428 and their respective control loops to be controlled in coordination with demand response layer 414. This configuration can advantageously reduce disruptive demand response behavior relative to conventional systems. For example, integrated control layer 418 can be configured to assure that a demand response-driven upward adjustment to the setpoint for chilled water temperature (or another component that directly or indirectly affects temperature) does not result in an increase in fan energy (or other energy used to cool a space) that would result in greater total building energy use than was saved at the chiller.

Integrated control layer 418 can be configured to provide feedback to demand response layer 414 so that demand response layer 414 checks that constraints (e.g., temperature, lighting levels, etc.) are properly maintained even while demanded load shedding is in progress. The constraints can also include setpoint or sensed boundaries relating to safety, equipment operating limits and performance, comfort, fire codes, electrical codes, energy codes, and the like. Integrated control layer 418 is also logically below fault detection and diagnostics layer 416 and automated measurement and validation layer 412. Integrated control layer 418 can be configured to provide calculated inputs (e.g., aggregations) to these higher levels based on outputs from more than one building subsystem.

Automated measurement and validation (AM&V) layer 412 can be configured to verify whether control strategies commanded by integrated control layer 418 or demand response layer 414 are working properly (e.g., using data aggregated by AM&V layer 412, integrated control layer 418, building subsystem integration layer 420, FDD layer 416, or otherwise). The calculations made by AM&V layer 412 can be based on building system energy models and/or equipment models for individual BMS devices or subsystems. For example, AM&V layer 412 can compare a model-predicted output with an actual output from building subsystems 428 to determine an accuracy of the model.

Fault detection and diagnostics (FDD) layer 416 can be configured to provide ongoing fault detection for building subsystems 428, building subsystem devices (i.e., building equipment), and control algorithms used by demand response layer 414 and integrated control layer 418. FDD layer 416 can receive data inputs from integrated control layer 418, directly from one or more building subsystems or devices, or from another data source. FDD layer 416 can automatically diagnose and respond to detected faults. The responses to detected or diagnosed faults can include providing an alert message to a user, a maintenance scheduling system, or a control algorithm configured to attempt to repair the fault or to work-around the fault.

FDD layer 416 can be configured to output a specific identification of the faulty component or cause of the fault (e.g., loose damper linkage) using detailed subsystem inputs available at building subsystem integration layer 420. In other exemplary embodiments, FDD layer 416 is configured to provide "fault" events to integrated control layer 418 which executes control strategies and policies in response to the received fault events. According to some embodiments, FDD layer 416 (or a policy executed by an integrated control engine or business rules engine) can shut-down systems or direct control activities around faulty devices or systems to reduce energy waste, extend equipment life, or assure proper control response.

FDD layer 416 can be configured to store or access a variety of different system data stores (or data points for live data). FDD layer 416 can use some content of the data stores to identify faults at the equipment level (e.g., specific chiller, specific AHU, specific terminal unit, etc.) and other content to identify faults at component or subsystem levels. For example, building subsystems 428 can generate temporal (i.e., time-series) data indicating the performance of BMS 400 and the various components thereof. The data generated by building subsystems 428 can include measured or calculated values that exhibit statistical characteristics and provide information about how the corresponding system or process (e.g., a temperature control process, a flow control process, etc.) is performing in terms of error from its setpoint. These processes can be examined by FDD layer 416 to expose when the system begins to degrade in performance and alert a user to repair the fault before it becomes more severe.

### Building Management System and Occupancy Data

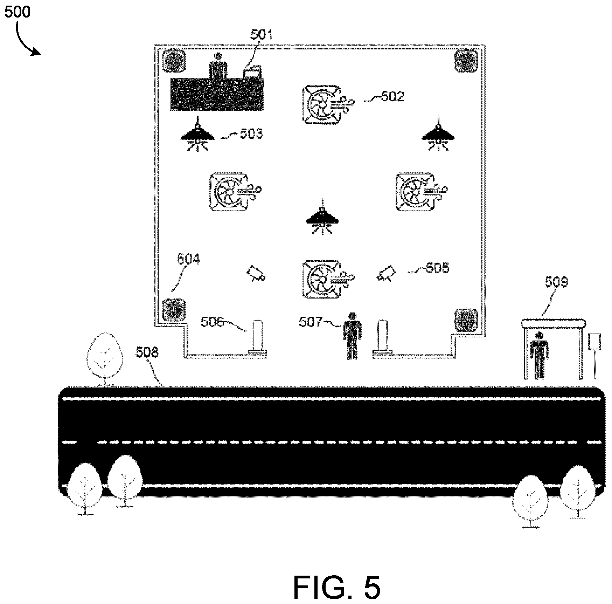

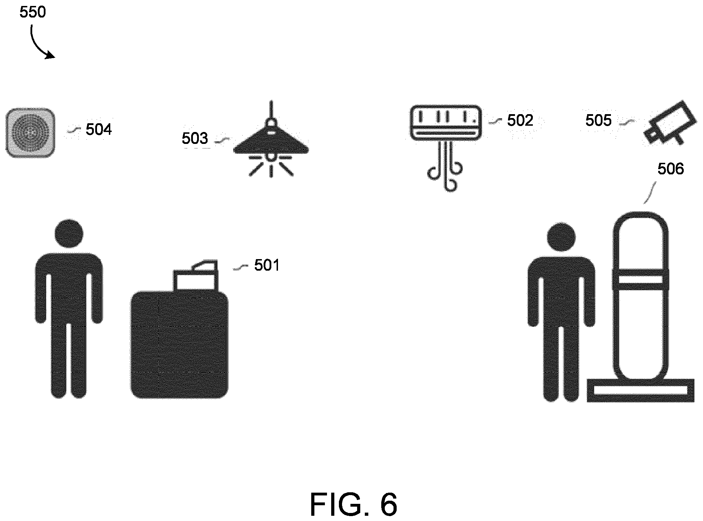

Referring now to FIGS. 5-8, systems and method for monitoring and controlling a building environment using occupancy data are shown, according to some embodiments.

FIGS. 5-6 are drawings of a retail environment 500 which can be monitored and controlled using a building management system (BMS) (e.g., the BMS of FIG. 4). Retail environment 500 provides an example of a building environment that can be controlled via the systems and methods of the present disclosure. Other building environments can also benefit from the disclosed systems and methods. For example, airports, shopping centers, and stadiums can also use occupancy data to control a building environment, according to the present disclosure.

Retail environment 500 can be contained within a building (e.g., building 10), with an external environment including features such as a roadway 508 and a bus stop 509. Within the building (e.g., building 10), a network 550 of devices can be used to monitor and control retail environment 500. When a person 507 enters the building, a traffic counter 506 can increment an occupancy count. Similarly, when person 507 exits the building, traffic counter 506 can decrement an occupancy count. In some embodiments, traffic counter 506 can communicate with a BMS controller (e.g., BMS controller 366), and can therefore provide the BMS controller with a real-time occupancy count.

In some embodiments, retail environment 500 can utilize a camera system, including camera 505. Camera 505 can be configured to capture physical details of person 507 when person 507 enters the building. In some embodiments, camera 505 can be further configured to estimate features of person 507 based on the captured physical details. As one example, camera 505 can estimate features such as gender, age, weight, and/or height. Camera 505 can communicate with the BMS controller (e.g., BMS controller 366), and can therefore provide the BMS controller with the estimated features of each occupant, in real-time. In some situations, camera 505 can be configured to simply capture images of person 507, and communicate the images to the BMS controller. The BMS controller can then process the images to estimate the features of person 507 (as opposed to camera 505 processing the images). In some embodiments, retail environment 500 can include multiple cameras. Further, the cameras can be placed throughout a space, as opposed to only at the entrance. In some embodiments, camera 505 can be placed at the entrance to provide an initial analysis of incoming persons, and additional cameras can be placed throughout retail environment 500 and can be configured to refine the initial analysis.

Using the BMS, the estimated features of person 507 can be combined with the estimated features of the other occupants of retail environment 500 to determine real-time store demographics. As one example, the BMS controller can determine that the current occupants are primarily males between the ages of twenty-one to thirty-five. The real-time demographic information can then be used by the BMS controller to adjust aspects of retail environment 500 (e.g., light 503 can increase or decrease in brightness, air conditioner 502 can increase or decrease in output temperature, and/or speaker 504 can increase or decrease output volume). In some embodiments, the type of music playing can be updated based on a change in the real-time demographics. As one example, if the average age of the occupants changes from 25 to 65, the music can change from a "Top 10" playlist to an "Oldies" playlist. Further, the music volume can be increased or decreased.

In some embodiments, the BMS can receive sales information from sales system 501. In some situations, the sales information can include each sale time and corresponding sale amount. Additionally or alternatively, the BMS can receive loyalty program information. For example, the BMS can receive a loyalty customer profile including social media data and music preferences and use the received music preferences to control the environment of the retail space. The BMS can be configured to compare the sales information to retail environment settings at the time of each sale. Accordingly, the BMS can be configured to determine and/or confirm relationships between retail environment settings and sales volume. In some situations, the BMS can determine that a preset relationship (e.g., younger shoppers prefer louder music) is not having the intended effect on sales. The BMS can then update the relationship to align with observed trends.

In addition to store demographics, the BMS can use additional information to make determinations regarding retail environment 500:

**Table 1: Examples of data types that can be provided to the BMS to determine desired environment settings**

| **Data Type** | **Example Content** |
|---|---|
| Traffic Data | • The number of people currently in the store |
| | • The rate at which people are entering and exiting the store |
| | • Long-term traffic predictions based on historical data |
| Demographic Data | • Age of current occupants/customers |
| | • Gender of current occupants/customers |
| | • Race of current occupants/customers |
| | • Eye movement and/or facial orientation (e.g., where occupants are looking) |
| Environmental Data | • Current weather |
| | • Weather forecast |
| | • Time of day, week, and/or year |
| | • Current road traffic conditions |
| Local Data | • Cultural data about the region |
| | • Popular music |
| | • Unpopular music |
| | • Typical lighting conditions |
| | • Typical temperature conditions and/or preferences |
| | • Schedules of major populations (e.g., school holidays, pension payment days, public holidays, public transportation schedules, etc.) |
| Retail Data | • Real-time feedback based on sales data and correlation with environmental data |
| | • Conversion rate (e.g., the number of total occupants compared to the number of occupants engaging in a purchase) |
| | • Loyalty card program data (e.g., profile of card holder including preferences, shopping history, etc.) |
| Store Preferences | • Store type |
| | • Preferred music genres or specific artists |
| | • Target demographic |
| | • Goals (e.g., image, profit, new product sales, etc.) |
| | • Loyal customer preferences (e.g., allow loyal customers to share their favorite songs and/or social media data to determine preferences) |

Other types of data can be used without departing from the principles described herein. The data types are not disclosed in a limiting fashion.

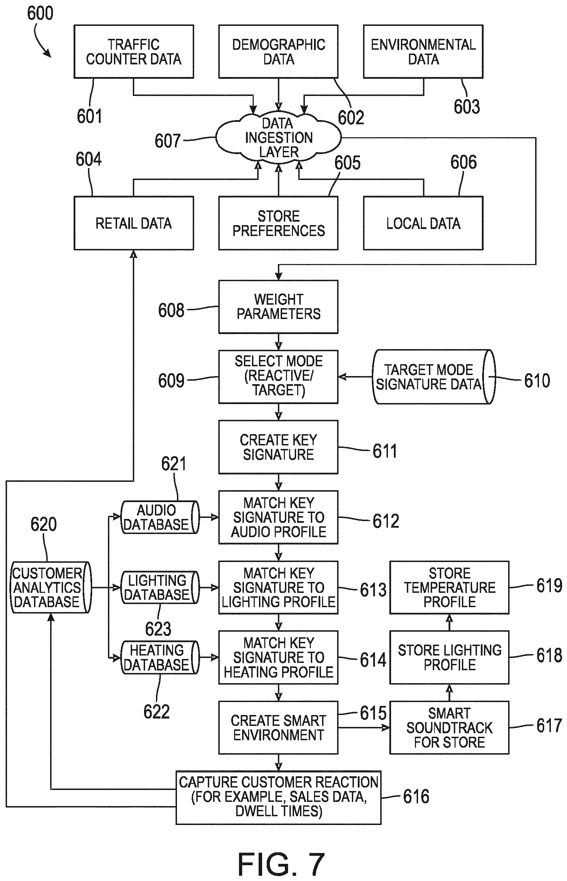

Referring now to FIG. 7, a method 600 for monitoring and controlling devices within a retail environment (e.g., retail environment 500) is shown, according to some embodiments. As shown, data can be input to a data ingestion layer (step 607). As described above, the data can come from a number of sources (e.g., network 550). In some embodiments, the data can include traffic counter data (step 601), demographic data (step 602), environmental data (step 603), retail data (step 604), store preferences (step 605), and/or local data (step 606). Examples of each data type are provided in Table 1, above. Data ingestion layer 607 can be included in BMS controller 366, in some embodiments.

Once data is provided to data ingestion layer 607, method 600 is shown to include determining weight parameters (step 608). Various data types (e.g., retail data, demographic data, environmental data, etc.), can affect sales in different ways and magnitudes. Accordingly, data types can be weighted differently (e.g., a food retailer can consider age to be a more important factor than gender. Using the weighting operation, the significance of gender can be reduced). In some embodiments, the weight parameters can be customizable. For example, if a new advertisement campaign is being rolled out, a store employee can manually adjust the weight parameters. Additionally or alternatively, the weight parameters may be adjusted to favor loyalty card holders. For example, the weight of environmental parameters associated with a loyalty card holder may be increased.

In some embodiments, method 600 can include selecting an operating mode (step 609). In some situations, two modes of operation can be used, for example. Mode 1 can be a "reactive" mode that assesses the current contextual information to create an environment that caters to the current occupants in a retail environment. Mode 2 can be a "target" mode that allows the application administrator to target an audience demographic to entice the demographic into the retail store. In some embodiments, "target" mode may fix an environmental parameter while allowing another to change. For example, "target" mode may fix a music selection to a summer playlist while allowing the system to change a volume of the music.

In some embodiments, the received data can be used to create a signature of the current conditions. If the target mode is enabled, pre-defined and machine-learned signatures (database 610) can be augmented with the received data to create a key signature (step 611). In some embodiments, the key signature can represent the current demographics and environment of the space. In situations where the target mode is enabled, the key signature can further represent the current demographics and environment of the space, combined with the desired demographics.

Method 600 is shown to further include matching the key signature to an audio profile (step 612), matching the key signature to a lighting profile (step 613), and matching the key signature to a heating profile (step 614). Accordingly, method 600 can include matching the current demographics and environment of the space to predetermined audio, lighting, and/or heating profiles. Each profile can be pre-categorized with matching fields associated with the signature data. The audio profile can be provided via audio database 621. Similarly, the lighting profile can be provided via lighting database 623, and the heating profile can be provided via heating database 622.

Method 600 is shown to include creating a smart environment (step 615). In some embodiments, the smart environment corresponds to the matched profiles resulting from the key signature. The audio, lighting, and/or heating parameters can be updated within the retail environment (e.g., BMS controller 366 can update parameters corresponding to HVAC system 100, lighting subsystem 442, etc.). Additionally or alternatively, suggestions for updated parameters can be provided to a store employee, and they can choose to accept or reject the suggestions. In some embodiments, the retail environment can be divided into multiple zones, with each zone capable of being configured for a different demographic.

Method 600 is shown to include storing the smart soundtrack for the store (step 617), storing the lighting profile (step 618), and storing the temperature profile (step 619). Storing the parameters provides a capture of the current environmental profile, which can be used to improve the effectiveness of the system over time.

Method 600 is shown to include capturing customer reactions (step 616). The customer reactions can be determined based on sales transactions (including timed transactional data and product category type), and computed dwell times, among other things. Customer reaction data can be provided to a customer analytics database (step 620) and/or the retail data source (step 604). The customer analytics database can be used to match customer reactions to the audio, lighting, and heating parameters at that time of occupancy. Over time, this feedback loop can improve and tailor the effectiveness of the system in catering for identified demographics. This data can be used to further enhance the target mode.

In some embodiments, the system can be used to target advertisements at demographics in the store at any given time (e.g., visual displays can change to match the current store demographics). Additionally, in some embodiments, the system can be used to analyze the impact of in-store promotions by correlating sales to metadata enhanced audio advertisements.

In some embodiments, the system can be used to reward loyal customers. For example, loyalty card holders may be able to indicate their favorite songs and/or other preferences. The system may develop the key signature based at least in part on loyalty card holder preferences. For example, a loyal customer may indicate a love of musical artist "Beyonce" through their loyalty card profile and the system may adjust the music of the store to play Beyonce.

Additionally or alternatively, the system can be used to react to security events. For example, occupancy counters in a stadium may indicate a large increase in traffic past a certain checkpoint over a short period of time. In response, the system may determine that the occupants are stampeding and unlock and/or open alternate routes of egress to reduce the congestion of traffic and prevent stampeding.

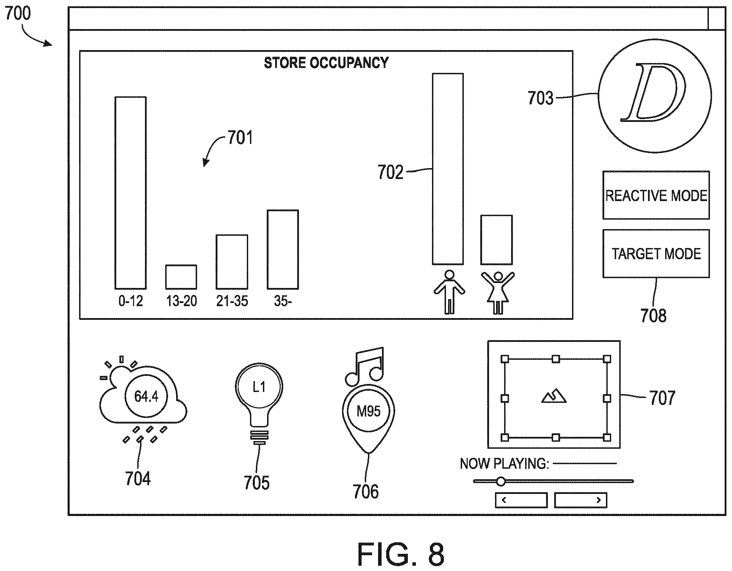

Referring now to FIG. 8, a drawing of an example user interface 700 for monitoring and controlling devices within a retail environment is shown, according to some embodiments. User interface 700 can be implemented on a store computer, laptop, cellphone, etc. In some embodiments, a user can be prompted to enter store credentials prior to receiving access to full operation of user interface 700.

User interface 700 is shown to include current age demographic estimations (701), gender estimations (702), and a store logo (703). User interface 700 is further shown to include a current heating profile (704), a current lighting profile (705), a current soundtrack profile (706), a current audio track being played (707), and mode selection buttons (708). Additional elements can be included on user interface 700. Similarly, fewer elements can be included on user interface 700. In some embodiments, a user can customize which elements are shown on user interface 700. Further, a user can customize the layout of the elements shown on user interface 700. Elements of user interface 700 can be updated in real-time, based on the store occupancy. Further, user interface 700 can be configured to display options to store employees regarding recommendations for changing lighting, audio, and/or heat parameters.

### EXAMPLES

The following examples are intended to highlight the different potential operations of the present disclosure. Additional implementations are not restricted to the examples herein. The operations discussed below are not disclosed in a limiting fashion.

### Example 1

A busy young-adult clothing store is reaching maximum occupancy. The volume of customer noise increases and the music is harder to hear. Traffic flow slows, with people lingering in the store. The store would like to maintain a vibrant, energetic atmosphere while ensuring queues and customer traffic keep moving.

The building management system (BMS):
- Selects an upbeat song with a higher tempo of 140 beats-per-minute (bpm), and increases the volume by 2 decibels (dB);
- Lowers the temperature of the store (e.g., via HVAC system 100) to improve customer comfort; and
- Increases the light intensity (e.g., via lighting subsystem 442) and changes the color to promote an energetic atmosphere.

### Example 2

Over a 30 minute period, clusters of young teenagers enter a family clothing department store on a Tuesday afternoon. This is unexpected and atypical for the time of the day. Perhaps local schools have been given a day off or half-day. The current playlist features music aimed at an older audience that is appropriate for the store's typical clientele, but less so for teenagers.

The building management system:
- Identifies a lighting profile from its database, to suit its new occupants; and
- Selects a song from the current Top 10 charts in that region, and continues to select from the Top 10 playlist, while a significant number of teens remain in the store.

### Example 3

On a rainy day, a large department store is busier than usual. The people are masquerading as customers to take shelter from the bad weather. It might only be a shower, so the customers could leave again soon if the rain eases off. Creating a warm, relaxing, and hospitable atmosphere can encourage the customers to stay and browse.

The building management system:
- Selects from an easy-listening playlist, featuring ambient music with a gentle tempo, and decreases the volume by 2 dB; and
- Increases the store temperature (e.g., via HVAC system 100) and store lighting (e.g., via lighting subsystem 442) to combat the outside weather conditions and make staying in the store more appealing than leaving.

### Example 4

A large department store is launching a marketing campaign aimed at soon-to-be college freshmen going on vacation. Seeking to tap into the sense of freedom conjured up by a summer vacation away from parents, the store uses the feel-good hits of the summer and the current US chart-topping songs.

The building management system:
- Store preferences are input into the BMS, targeting the desired age demographic; and
- Curated information, along with previously acquired data, is used to define an environment that entices the target demographic to enter and stay in the store during the 6-week run-in to the summer vacations in May and June.

### Example 5

In a large shoe store, the BMS has identified a demographic of young children as well as adult females. The local calendar has indicated the kids will be returning to school in the coming weeks. This could indicate that mothers are bringing their children to the store to be fitted for new shoes for the coming school year. This is potentially a stressful time.

The building management system:
- Selects a playlist that is kid-friendly and designed to reduce anxiety; and
- Changes light colors (e.g., via lighting subsystem 442) to promote calm in the store.

### Example 6

Occupancy counters in a retail space indicate a large number of individuals entering the retail space in a short amount of time. The retail space is approaching capacity and yet the occupancy count continues to increase rapidly. This could indicate a stampede.

The building management system:
- Unlocks and opens all of the doors to the retail space to allow occupants to exit; and
- Raises an alarm (e.g., via security subsystem 438) to indicate a stampede.

### Example 7

A store is having a summer sale. The building management system is controlling the retail space in a "target" mode to target and entice a desired demographic into the retail space for the summer sale. A number of individuals are entering the retail space. The noise threshold of the retail space increases with the additional customers, making the music more difficult to hear.

The building management system:
- Continues playing a summer music playlist; and
- Increases the volume of the music to account for the higher noise threshold associated with the increase in customers.

As described above, the present disclosure can be implemented in a variety of spaces, including, retail stores, airports, malls, stadiums, movie theaters, and more. The systems and methods can be implemented in any space where influencing the mentality of the occupants is desired.

### Configuration of Exemplary Embodiments

The construction and arrangement of the systems and methods as shown in the various exemplary embodiments are illustrative only. Although only a few embodiments have been described in detail in this disclosure, many modifications are possible (e.g., variations in sizes, dimensions, structures, shapes and proportions of the various elements, values of parameters, mounting arrangements, use of materials, colors, orientations, etc.). For example, the position of elements can be reversed or otherwise varied and the nature or number of discrete elements or positions can be altered or varied. Accordingly, all such modifications are intended to be included within the scope of the present disclosure. The order or sequence of any process or method steps can be varied or re-sequenced according to alternative embodiments. Other substitutions, modifications, changes, and omissions can be made in the design, operating conditions and arrangement of the exemplary embodiments without departing from the scope of the present disclosure.

The present disclosure contemplates methods, systems and program products on any machine-readable media for accomplishing various operations. The embodiments of the present disclosure can be implemented using existing computer processors, or by a special purpose computer processor for an appropriate system, incorporated for this or another purpose, or by a hardwired system. Embodiments within the scope of the present disclosure include program products including machine-readable media for carrying or having machine-executable instructions or data structures stored thereon. Such machine-readable media can be any available media that can be accessed by a general purpose or special purpose computer or other machine with a processor. By way of example, such machine-readable media can include RAM, ROM, EPROM, EEPROM, CD-ROM or other optical disk storage, magnetic disk storage or other magnetic storage devices, or any other medium which can be used to carry or store desired program code in the form of machine-executable instructions or data structures and which can be accessed by a general purpose or special purpose computer or other machine with a processor. Combinations of the above are also included within the scope of machine-readable media. Machine-executable instructions include, for example, instructions and data which cause a general purpose computer, special purpose computer, or special purpose processing machines to perform a certain operation or group of operations.

Although the figures show a specific order of method steps, the order of the steps can differ from what is depicted. Also two or more steps can be performed concurrently or with partial concurrence. Such variation will depend on the software and hardware systems chosen and on designer choice. All such variations are within the scope of the disclosure. Likewise, software implementations could be accomplished with standard programming techniques with rule based logic and other logic to accomplish the various connection steps, processing steps, comparison steps and decision steps.

## Claims

1. A system for controlling a space (10), comprising:
- a plurality of environmental sensors (362, 364) configured to measure an attribute of the space; and
- a user device (366) configured to:
- receive data from the plurality of environmental sensors (362, 364), the data describing one or more characteristics of one or more individuals (507) in the space;
- determine real-time demographic information based on the data of the one or more individuals (507) in the space;
- receive, from the user, a selection of a desired demographic;
- construct a signature for the space (10) based on the real-time
demographic information and the desired demographic, the signature comprising one or more environmental conditions associated with the desired demographic; and
- send control signals to one or more environmental devices to control an environment of the space according to the signature.

2. The system of Claim 1,
the one or more environmental devices comprising at least one of a lighting system (442), an audio system, or an HVAC system (100, 440); and/or
wherein controlling an environment of the space comprises controlling at least one of music, lighting, temperature, or visual displays.

3. The system of Claim 1 or 2,
wherein the data comprises a number of the one or more individuals, an age of the one or more individuals, and a sex of the one or more individuals.

4. The system of Claim 3,
wherein the user device is further configured to receive a selection from the user to operate in a first reactive mode or a second target mode, wherein the first reactive mode constructs the signature to maximize an occupancy of the space, and wherein the second target mode constructs the signature to maximize an occupancy of the space associated with the desired demographic.

5. The system of Claim 3 or 4,
wherein the user device is further configured to measure a change in the data as a result of controlling the environment of the space, and store an updated signature, the updated signature based on the change in the data.

6. The system of Claim 5,
wherein the user device is further configured to send updated control signals to the one or more environmental devices to control the environment of the space according to the updated signature.

7. The system of one of Claims 1 to 6,
wherein the system is a building management system, BMS, (400), and wherein the user device is a control system (366) configured to:
- receive data from the plurality of environmental sensors, the data describing one or more characteristics of one or more individuals (507) in the space (10);
- determine real-time demographic information based on the data of the one or more individuals in the space;
- receive, from a user via a user device, a selection of a desired demographic;
- construct a signature for the space based on the real-time demographic information and the desired demographic, the signature comprising one or more environmental conditions associated with the desired demographic; and
- send control signals to one or more environmental devices to control an environment of the space according to the signature.

8. The building management system, BMS, (400) of Claim 7,
wherein the control system (366) is further configured to receive a selection from the user to operate in a first reactive mode or a second target mode, wherein the first reactive mode constructs the signature to maximize an occupancy of the space, and wherein the second target mode constructs the signature to maximize an occupancy of the space associated with the desired demographic.

9. The building management system, BMS, (400) of Claim 7 or 8,
wherein the occupancy control system (366) is further configured to measure a change in the data as a result of controlling the environment of the space, and store an updated signature, the updated signature based on the change in the data.

10. A method (600) of controlling a space, the method (600) comprising:
- receiving from a plurality of environmental sensors, data describing one or more characteristics of one or more individuals in the space (601, 602);
- determining real-time demographic information based on the data of the one or more individuals in the space;
- receiving, from a user via a user device, a selection of a desired demographic (605);
- constructing a signature (611) for the space based on the real-time
demographic information and the desired demographic, the signature comprising one or more environmental conditions associated with the desired demographic; and
- sending control signals to one or more environmental devices to control an environment of the space according to the signature.

11. The method (600) of Claim 10,
the one or more environmental devices comprising at least one of a lighting system (442), an audio system, or an HVAC system (100, 440); and/or
wherein controlling an environment of the space comprises controlling at least one of music, lighting, temperature, or visual displays.

12. The method (600) of Claim 10 or 11,
wherein the data comprises a number of the one or more individuals, an age of the one or more individuals, and a sex of the one or more individuals.

13. The method (600) of one of Claims 10 to 12,
the method (600) further comprising receiving a selection from the user to operate in a first reactive mode or a second target mode, wherein the first reactive mode constructs the signature to maximize an occupancy of the space, and wherein the second target mode constructs the signature to maximize an occupancy of the space associated with the desired demographic.

14. The method (600) of one of Claims 10 to 13,
the method (600) further comprising measuring a change in the data as a result of controlling the environment of the space, and storing an updated signature, the updated signature based on the change in the data.

15. The method (600) of Claim 14,
the method (600) further comprising sending updated control signals to the one or more environmental devices to control the environment of the space according to the updated signature.

## Patentansprüche

1. System zum Überwachen eines Raums (10), umfassend:
- eine Mehrzahl von Umgebungssensoren (362, 364), die zum Messen eines Attributs des Raums konfiguriert ist; und
- eine Benutzervorrichtung (366), die konfiguriert ist zum:
- Empfangen von Daten von der Mehrzahl von Umgebungssensoren (362, 364), wobei die Daten eine oder mehrere Charakteristiken eines oder mehrerer Individuen (507) im Raum beschreiben;
- Bestimmen von demografischen Echtzeitinformationen basierend auf den Daten des einen oder der mehreren Individuen (507) im Raum;
- Empfangen einer Auswahl einer gewünschten Demografie vom Benutzer;
- Erstellen einer Signatur für den Raum (10) basierend auf den demografischen Echtzeitinformationen und der gewünschten Demografie, wobei die Signatur eine oder mehrere Umgebungsbedingungen umfasst, die mit der gewünschten Demografie assoziiert sind; und
- Senden von Steuersignalen zum Überwachen einer Umgebung des Raums gemäß der Signatur an eine oder mehrere Umgebungseinrichtungen.

2. System nach Anspruch 1,
wobei die eine oder die mehreren Umgebungseinrichtungen mindestens eines von einem Beleuchtungssystem (442), einem Audiosystem oder einem HVAC-System (100, 440) umfassen; und/oder
wobei das Überwachen einer Umgebung des Raums ein Überwachen mindestens eines von Musik, Beleuchtung, Temperatur oder optischen Anzeigen umfasst.

3. System nach Anspruch 1 oder 2,
wobei die Daten eine Anzahl des einen oder der mehreren Individuen, ein Alter des einen oder der mehreren Individuen und ein Geschlecht des einen oder der mehreren Individuen umfassen.

4. System nach Anspruch 3,
wobei die Benutzervorrichtung ferner so konfiguriert ist, dass sie eine Auswahl vom Benutzer für Betrieb in einem ersten Reaktionsmodus oder einem zweiten Zielmodus empfängt, wobei der erste Reaktionsmodus die Signatur zum Maximieren einer Belegung des Raums erstellt, und wobei der zweite Zielmodus die Signatur zum Maximieren einer Belegung des Raums erstellt, die mit der gewünschten Demografie assoziiert ist.

5. System nach Anspruch 3 oder 4,
wobei die Benutzervorrichtung ferner so konfiguriert ist, dass sie eine Änderung der Daten als Ergebnis des Überwachens der Umgebung des Raums misst und eine aktualisierte Signatur speichert, wobei die aktualisierte Signatur auf der Änderung der Daten basiert.

6. System nach Anspruch 5,
wobei die Benutzervorrichtung ferner so konfiguriert ist, dass sie aktualisierte Steuersignale zum Überwachen der Umgebung des Raums gemäß der aktualisierten Signatur an die eine oder die mehreren Umgebungseinrichtungen sendet.

7. System nach einem der Ansprüche 1 bis 6,
wobei das System ein Gebäudeverwaltungssystem, BMS, (400) ist, und wobei die Benutzervorrichtung ein Überwachungssystem (366) ist, das konfiguriert ist zum:
- Empfangen von Daten von der Mehrzahl von Umgebungssensoren, wobei die Daten eine oder mehrere Charakteristiken eines oder mehrerer Individuen (507) im Raum (10) beschreiben;
- Bestimmen von demografischen Echtzeitinformationen basierend auf den Daten des einen oder der mehreren Individuen im Raum;
- Empfangen einer Auswahl einer gewünschten Demografie vom Benutzer über eine Benutzervorrichtung;
- Erstellen einer Signatur für den Raum basierend auf den demografischen Echtzeitinformationen und der gewünschten Demografie, wobei die Signatur eine oder mehrere Umgebungsbedingungen umfasst, die mit der gewünschten Demografie assoziiert sind; und
- Senden von Steuersignalen zum Überwachen einer Umgebung des Raums gemäß der Signatur an eine oder mehrere Umgebungseinrichtungen.

8. Gebäudeverwaltungssystem, BMS, (400) nach Anspruch 7,
wobei das Überwachungssystem (366) ferner so konfiguriert ist, dass es eine Auswahl vom Benutzer für Betrieb in einem ersten Reaktionsmodus oder einem zweiten Zielmodus empfängt, wobei der erste Reaktionsmodus die Signatur zum Maximieren einer Belegung des Raums erstellt, und wobei der zweite Zielmodus die Signatur zum Maximieren einer Belegung des Raums erstellt, die mit der gewünschten Demografie assoziiert ist.

9. Gebäudeverwaltungssystem, BMS, (400) nach Anspruch 7 oder 8, wobei das Belegungsüberwachungssystem (366) ferner so konfiguriert ist, dass es eine Änderung der Daten als Ergebnis des Überwachens der Umgebung des Raums misst und eine aktualisierte Signatur speichert, wobei die aktualisierte Signatur auf der Änderung der Daten basiert.

10. Verfahren zur (600) zur Überwachung eines Raums, wobei das Verfahren (600) umfasst:
- Empfangen von Daten von einer Mehrzahl von Umgebungssensoren, wobei die Daten eine oder mehrere Charakteristiken eines oder mehrerer Individuen im Raum beschreiben (601, 602);
- Bestimmen von demografischen Echtzeitinformationen basierend auf den Daten des einen oder der mehreren Individuen im Raum;
- Empfangen einer Auswahl einer gewünschten Demografie vom Benutzer über eine Benutzervorrichtung (605);
- Erstellen einer Signatur (611) für den Raum basierend auf den demografischen Echtzeitinformationen und der gewünschten Demografie, wobei die Signatur eine oder mehrere Umgebungsbedingungen umfasst, die mit der gewünschten Demografie assoziiert sind; und
- Senden von Steuersignalen zum Überwachen einer Umgebung des Raums gemäß der Signatur an eine oder mehrere Umgebungseinrichtungen.

11. Verfahren (600) nach Anspruch 10,
wobei die eine oder die mehreren Umgebungseinrichtungen mindestens eines von einem Beleuchtungssystem (442), einem Audiosystem oder einem HVAC-System (100, 440) umfassen; und/oder
wobei das Überwachen einer Umgebung des Raums ein Überwachen mindestens eines von Musik, Beleuchtung, Temperatur oder optischen Anzeigen umfasst.

12. Verfahren (600) nach Anspruch 10 oder 11,
wobei die Daten eine Anzahl des einen oder der mehreren Individuen, ein Alter des einen oder der mehreren Individuen und ein Geschlecht des einen oder der mehreren Individuen umfassen.

13. Verfahren (600) nach einem der Ansprüche 10 bis 12,
wobei das Verfahren (600) ferner ein Empfangen einer Auswahl vom Benutzer für Betrieb in einem ersten Reaktionsmodus oder einem zweiten Zielmodus umfasst, wobei der erste Reaktionsmodus die Signatur zum Maximieren einer Belegung des Raums erstellt, und wobei der zweite Zielmodus die Signatur zum Maximieren einer Belegung des Raums erstellt, die mit der gewünschten Demografie assoziiert ist.

14. Verfahren (600) nach einem der Ansprüche 10 bis 13,
wobei das Verfahren (600) ferner ein Messen einer Änderung der Daten als Ergebnis des Überwachens der Umgebung des Raums und Speichern einer aktualisierten Signatur umfasst, wobei die aktualisierte Signatur auf der Änderung der Daten basiert.

15. Verfahren (600) nach Anspruch 14,
wobei das Verfahren (600) ferner ein Senden von aktualisierten Steuersignalen zum Überwachen der Umgebung des Raums gemäß der aktualisierten Signatur an die eine oder die mehreren Umgebungseinrichtungen umfasst.

## Revendications

1. Système pour contrôler un espace (10), comprenant:
- une pluralité de capteurs environnementaux (362, 364) configurés pour mesurer un attribut de l'espace ; et
- un dispositif utilisateur (366) configuré pour :
- recevoir des données de la pluralité de capteurs environnementaux (362, 364), les données décrivant une ou plusieurs caractéristiques d'un ou plusieurs individus (507) dans l'espace ;
- déterminer des informations démographiques en temps réel sur la base des données des un ou plusieurs individus (507) dans l'espace ;
- recevoir, de la part de l'utilisateur, une sélection de démographie souhaitée ;
- construire une signature pour l'espace (10) sur la base des informations démographiques en temps réel et de la démographie souhaitée, la signature comprenant une ou plusieurs conditions environnementales associées à la démographie souhaitée ; et
- envoyer des signaux de contrôle à un ou plusieurs dispositifs environnementaux pour contrôler un environnement de l'espace en fonction de la signature.

2. Système selon la revendication 1,
les un ou plusieurs dispositifs environnementaux comprenant au moins l'un d'un système d'éclairage (442), d'un système audio, ou d'un système HVAC (100, 440) ; et/ou
dans lequel le contrôle d'un environnement de l'espace comprend le contrôle d'au moins un élément parmi la musique, l'éclairage, la température ou les affichages visuels.

3. Système selon la revendication 1 ou la revendication 2,
dans lequel les données comprennent un nombre d'un ou plusieurs individus, l'âge d'un ou plusieurs individus, et le sexe d'un ou plusieurs individus.

4. Système selon la revendication 3,
dans lequel le dispositif utilisateur est en outre configuré pour recevoir une sélection de l'utilisateur pour fonctionner dans un premier mode réactif ou un second mode cible, où le premier mode réactif construit la signature pour maximiser une occupation de l'espace, et où le second mode cible construit la signature pour maximiser une occupation de l'espace associé à la démographie souhaitée.

5. Système selon la revendication 3 ou la revendication 4,
dans lequel le dispositif utilisateur est en outre configuré pour mesurer un changement dans les données à la suite du contrôle de l'environnement de l'espace, et stocker une signature mise à jour, la signature mise à jour étant basée sur le changement dans les données.

6. Système selon la revendication 5,
dans lequel le dispositif utilisateur est en outre configuré pour envoyer des signaux de contrôle mis à jour aux un ou plusieurs dispositifs environnementaux pour contrôler l'environnement de l'espace en fonction de la signature mise à jour.

7. Système selon l'une des revendications 1 à 6,
dans lequel le système est un système de gestion de bâtiment, BMS, (400), et dans lequel le dispositif utilisateur est un système de contrôle (366) configuré pour :
- recevoir des données de la pluralité de capteurs environnementaux, les données décrivant une ou plusieurs caractéristiques d'un ou plusieurs individus (507) dans l'espace (10) ;
- déterminer des informations démographiques en temps réel basées sur les données d'un ou plusieurs individus dans l'espace ;
- recevoir, de la part d'un utilisateur, par l'intermédiaire d'un dispositif utilisateur, une sélection de démographie souhaitée ;
- construire une signature pour l'espace sur la base des informations démographiques en temps réel et de la démographie souhaitée, la signature comprenant une ou plusieurs conditions environnementales associées à la démographie souhaitée ; et
- envoyer des signaux de contrôle à un ou plusieurs dispositifs environnementaux pour contrôler un environnement de l'espace en fonction de la signature.

8. Système de gestion de bâtiment, BMS, (400) selon la revendication 7,
dans lequel le système de contrôle (366) est en outre configuré pour recevoir une sélection de l'utilisateur pour fonctionner dans un premier mode réactif ou un second mode cible, où le premier mode réactif construit la signature pour maximiser une occupation de l'espace, et où le second mode cible construit la signature pour maximiser une occupation de l'espace associée à la démographie souhaitée.

9. Système de gestion de bâtiment, BMS, (400) selon la revendication 7 ou la revendication 8, dans lequel le système de contrôle d'occupation (366) est en outre configuré pour mesurer un changement dans les données suite au contrôle de l'environnement de l'espace, et stocker une signature mise à jour, la signature mise à jour étant basée sur le changement dans les données.

10. Procédé (600) de contrôle d'un espace, le procédé (600) comprenant les étapes suivantes :
- recevoir, depuis une pluralité de capteurs environnementaux, des données décrivant une ou plusieurs caractéristiques d'un ou plusieurs individus dans l'espace (601, 602) ;
- déterminer des informations démographiques en temps réel sur la base des données des un ou plusieurs individus dans l'espace ;
- recevoir, de la part d'un utilisateur par l'intermédiaire d'un dispositif utilisateur, une sélection de démographie souhaitée (605) ;
- construire une signature (611) pour l'espace sur la base des informations démographiques en temps réel et de la démographie souhaitée, la signature comprenant une ou plusieurs conditions environnementales associées à la démographie souhaitée ; et
- envoyer des signaux de contrôle à un ou plusieurs dispositifs environnementaux pour contrôler un environnement de l'espace en fonction de la signature.

11. Procédé (600) selon la revendication 10,
les un ou plusieurs dispositifs environnementaux comprenant au moins l'un d'un système d'éclairage (442), d'un système audio, ou d'un système HVAC (100, 440) ; et/ou
dans lequel le contrôle d'un environnement de l'espace comprend le contrôle d'au moins un élément parmi la musique, l'éclairage, la température ou les affichages visuels.

12. Procédé (600) selon la revendication 10 ou la revendication 11,
dans lequel les données comprennent un nombre d'un ou plusieurs individus, l'âge d'un ou plusieurs individus, et le sexe d'un ou plusieurs individus.

13. Procédé (600) selon l'une des revendications 10 à 12,
le procédé (600) comprenant en outre de recevoir une sélection de l'utilisateur pour fonctionner dans un premier mode réactif ou un second mode cible, où le premier mode réactif construit la signature pour maximiser une occupation de l'espace, et où le second mode cible construit la signature pour maximiser une occupation de l'espace associé à la démographie souhaitée.

14. Procédé (600) selon l'une des revendications 10 à 13,
le procédé (600) comprenant en outre de mesurer un changement dans les données à la suite du contrôle de l'environnement de l'espace, et de stocker une signature mise à jour, la signature mise à jour étant basée sur le changement dans les données.

15. Procédé (600) selon la revendication 14,
le procédé (600) comprenant en outre d'envoyer des signaux de contrôle mis à jour aux un ou plusieurs dispositifs environnementaux pour contrôler l'environnement de l'espace en fonction de la signature mise à jour.
